# EUROPÄISCHE PATENTSCHRIFT

(11) **EP 3 400 490 B1**
(45) Veröffentlichungstag und Bekanntmachung des Hinweises auf die Patenterteilung: **29.03.2023**
(21) Anmeldenummer: 17703704.1
(22) Anmeldetag: 01.02.2017
(51) Int. Cl.: G05B 17/02, G05B 13/02, G05B 13/04

(54) **VERFAHREN UND VORRICHTUNG ZUM STEUERN EINES TECHNISCHEN SYSTEMS ANHAND VON STEUERMODELLEN**
METHOD AND DEVICE FOR CONTROLLING A TECHNICAL SYSTEM BY MEANS OF CONTROL MODELS
PROCÉDÉ ET DISPOSITIF DE COMMANDE D'UN SYSTÈME TECHNIQUE À L'AIDE DE MODÈLES DE COMMANDE

(30) Priorität: 09.03.2016 DE 102016203855
(43) Veröffentlichungstag der Anmeldung: 14.11.2018
(73) Patentinhaber: Siemens Aktiengesellschaft, 80333 München (DE)
(72) Erfinder: DÜLL, Siegmund, 80336 München (DE); GEIPEL, Markus Michael, 80799 München (DE); HEYNE, Jean-Christoph, 90425 Nürnberg (DE); STERZING, Volkmar, 85579 Neubiberg (DE)
(74) Vertreter: Siemens Patent Attorneys
(86) Internationale Anmeldenummer: PCT/EP2017/052133
(87) Internationale Veröffentlichungsnummer: WO 2017/153095

(56) Entgegenhaltungen:
- DE-A1- 19 841 165
- US-A1- 2007 142 936
- US-A1- 2007 265 713
- US-A1- 2014 214 733

## Beschreibung

Bei der Steuerung komplexer technischer Systeme, wie z.B. Gasturbinen, Windturbinen oder Fertigungsanlagen, ist es in der Regel wünschenswert, das Systemverhalten hinsichtlich vorgegebener Kriterien zu optimieren. Hierfür verwenden zeitgemäße Steuerungen häufig Techniken des maschinellen Lernens. So kann z.B. ein neuronales Netz als Steuermodell darauf trainiert werden, ein technisches System hinsichtlich einer Vielzahl von Kriterien zu optimieren.

Speziell die Steuerung größerer Anlagen stellt indes erhöhte Anforderungen an Sicherheit und Flexibilität der verwendeten Steuersysteme, die in vielen Fällen einen aufwändigen Zertifizierungsprozess zu durchlaufen haben. Dies erschwert jedoch in der Regel den Einsatz lernbasierter Steuersysteme, da deren interne Wirkungsbeziehungen von außen oft schwer nachvollziehbar sind und sich abhängig von einem Trainingszustand ändern können. Zudem existiert eine Vielzahl von Steuermodellen mit unterschiedlichen Implementierungsanforderungen. Dementsprechend gestaltet sich ein Einsatz lernbasierter Steuermodelle speziell bei größeren technischen Systemen oft aufwändig.

Die US 2014/0214733 A1 offenbart ein Verfahren zum Ableiten diagnostischer Daten eines technischen Systems unter Nutzung eines maschinellen Lernverfahrens und Soft-Sensor-Modellen des technischen Systems.

DE 198 41 165 A1 offenbart ein Verfahren zur Bestimmung eines auf eine bestimmte technische Anlage abgestimmten und zur Prozeßdatenvalidierung einsetzbaren Prozeßdatenvalidierungsmodells, wobei zu allen Anlagenkomponenten mehrere Varianten von mathemathischen Modellen verfügbar sind und das richtige Modell für jede ausgeführte Komponente ausgewählt wird.

US 2007/265713 A1 offenbart ein Verfahren zum Überwachen einer Komponente eines technischen Systems, wobei die Komponenten des Systems durch Modelle dargestellt werden und anhand des Betriebszustands das passende Modell ausgewählt wird.

US 2007/142936 A1 offenbart ein Verfahren zum Steuern eines technischen Systems, wobei die das System steuernde Steuermodelle adaptiv angepasst werden.

Es ist Aufgabe der vorliegenden Erfindung, ein Verfahren und eine Vorrichtung zum Steuern eines technischen Systems anzugeben, die einen flexibleren Einsatz von lernbasierten Steuermodellen erlauben.

Gelöst wird diese Aufgabe durch ein Verfahren mit den Merkmalen des Patentanspruches 1, durch eine Vorrichtung mit den Merkmalen des Patentanspruches 12, durch ein Computerprogrammprodukt mit den Merkmalen des Patentanspruches 13 sowie durch ein computerlesbares Speichermedium mit den Merkmalen des Patentanspruches 14.

Zum Steuern eines technischen Systems anhand eines trainierten und/oder trainierbaren Steuermodells wird ein Datencontainer empfangen, in dem ein Steuermodell mit einer Trainingsstruktur sowie eine Modelltypinformation modelltypübergreifend kodiert sind. Die Trainingsstruktur kann hierbei insbesondere eine trainierte, trainierbare, lernfähige und/oder bei einem Training ausgebildete Struktur und/oder einen Trainingszustand des Steuermodells betreffen. Unter einem Training ist hierbei insbesondere zu verstehen, dass eine Abbildung von Eingangsparametern des Steuermodells auf eine oder mehrere Zielgrößen nach vorgebbaren Kriterien während einer Trainingsphase optimiert wird. Ein solches Training kann z.B. durch ein Training eines neuronalen Netzes, durch eine Regression eines analytischen oder statistischen Modells und/oder durch eine andere Art von Parameterfitting realisiert sein. Erfindungsgemäß wird abhängig von der Modelltypinformation eines von mehreren modelltypspezifischen Ausführungsmodulen für das technische System selektiert. Weiterhin werden abhängig von der Modelltypinformation Betriebsdatenkanäle des technischen Systems Eingabekanälen des Steuermodells zugeordnet. Über einen jeweiligen Betriebsdatenkanal werden Betriebsdaten des technischen Systems erfasst und über einen diesem Betriebsdatenkanal zugeordneten Eingabekanal dem Steuermodell übermittelt. Das Steuermodell wird mittels des selektierten Ausführungsmoduls ausgeführt, wobei aus den übermittelten Betriebsdaten gemäß der Trainingsstruktur Steuerdaten abgeleitet werden, die zum Steuern des technischen Systems ausgegeben werden. Als Steuerdaten können auch steuerungsrelevante Prognosedaten und/oder Überwachungsdaten ausgegeben werden.

Zur Durchführung des erfindungsgemäßen Verfahrens sind eine Steuervorrichtung, ein Computerprogrammprodukt sowie ein computerlesbares Speichermedium vorgesehen.

Ein Vorteil der Erfindung ist darin zu sehen, dass durch die modelltypspezifischen Ausführungsmodule Steuerstrukturen des technischen Systems von spezifischen Anforderungen unterschiedlicher Steuermodelltypen weitgehend entkoppelt werden können. Dies erlaubt eine einfachere und flexiblere Implementierung ganz unterschiedlicher Steuermodelle. Insbesondere können unterschiedliche Steuermodelle auf demselben technischen System und dasselbe Steuermodell auf unterschiedlichen technischen Systemen automatisch ausgeführt werden.

Durch die modelltypspezifische Zuordnung von Betriebsdatenkanälen zu Eingabekanälen kann das Steuermodell typgerecht mit Betriebsdaten angesteuert werden.

Vorteilhafte Ausführungsformen und Weiterbildungen der Erfindung sind in den abhängigen Ansprüchen angegeben.

Vorzugsweise kann das Steuermodell ein neuronales Netz, einen datengetriebenen Regressor, eine Support-Vector-Machine und/oder einen Entscheidungsbaum umfassen. Die vorstehenden Implementierungen können jeweils mit einer Trainingsstruktur versehen sein und durch eine spezifische Modelltypinformation identifiziert werden.

Gemäß einer vorteilhaften Ausführungsform der Erfindung kann das Steuermodell im Datencontainer in verschlüsselter Form vorliegen und durch das technische System zumindest teilweise entschlüsselt werden. Auf diese Weise kann das Steuermodell bei Übertragung und Speicherung vor unbefugtem Zugriff geschützt werden.

Vorzugsweise kann das Steuermodell derart kodiert und/oder verschlüsselt sein, dass es verhindert oder erschwert wird, anhand von zur Ausführung des Steuermodells dekodierten und/oder entschlüsselten Teilen des Steuermodells eine Modellstruktur des Steuermodells abzuleiten. Die Modellstruktur kann z.B. die Trainingsstruktur und/oder eine spezifische Schicht-, Knoten-, Vernetzungs- oder Gewichtestruktur eines neuronalen Netzes betreffen. Das Steuermodell kann hierbei so verschlüsselt werden, dass nur ausführungsrelevante Teile des Steuermodells durch das technische System entschlüsselbar sind, eine spezifische Modellstruktur aber weitgehend verborgen bleibt. So kann bei einem neuronalen Netz nur eine ausführbare Berechnungsroutine kodiert werden, aus der sich eine spezifische Vernetzungsstruktur nur schwer ableiten lässt. Das Steuermodell kann so gewissermaßen als Black Box ausgeführt werden. Durch eine derartige Kodierung bzw. Verschlüsselung kann in der Modellstruktur enthaltenes Know-How geschützt werden.

Weiterhin kann das Steuermodell im Datencontainer mit einer digitalen Signatur versehen sein, die z.B. durch das technische System geprüft wird. Das Steuermodell kann dann abhängig vom Prüfungsergebnis ausgeführt werden. Auf diese Weise kann eine Integrität des Steuermodells sichergestellt werden. Insbesondere können eine Erstellung, ein Training und/oder Änderungen des Steuermodells eindeutig einer verantwortlichen Stelle zugerechnet werden.

Darüber hinaus kann der Datencontainer eine Trainingsinformation über ein Training des Steuermodells umfassen. Die Ausführung des Steuermodells und/oder die Selektion des Ausführungsmoduls kann dann abhängig von der Trainingsinformation erfolgen. Die Trainingsinformation kann insbesondere einen erfolgten oder folgenden Trainingsprozess des Steuermodells betreffen.

Nach einer vorteilhaften Ausführungsform der Erfindung kann den Betriebsdatenkanälen und den Eingabekanälen jeweils ein Datentyp, eine physikalische Dimension, ein Wertebereich und/oder eine Nebenbedingung zugeordnet sein. Beim Zuordnen eines jeweiligen Betriebsdatenkanals zu einem jeweiligen Eingabekanal kann geprüft werden, ob die zugeordneten Datentypen, physikalischen Dimensionen, Wertebereiche und/oder Nebenbedingungen kompatibel sind. Als physikalische Dimensionen können z.B. Meter, Sekunde, Gramm oder Kombinationen hiervon zugeordnet werden. Auf diese Weise kann in vielen Fällen gewährleistet werden, dass das Steuermodell mit korrekten Betriebsdaten angesteuert wird. Alternativ oder zusätzlich können die erfassten Betriebsdaten hinsichtlich Datentyp, physikalischer Dimension, Wertebereich und/oder Nebenbedingungen überprüft werden, um so eine korrekte Ansteuerung des Steuermodells während der Ausführung sicherzustellen.

Weiterhin können die Steuerdaten hinsichtlich ihres Wertebereichs, einer Werteveränderung und/oder einer Nebenbedingung geprüft werden. Da bei trainierten Steuermodellen die Abhängigkeiten der Ausgabedaten von Eingabedaten in der Regel nicht explizit bekannt sind, und Modellfehler oft nicht ausgeschlossen werden können, kann durch Prüfung von vorgegebenen Nebenbedingungen eine Fehlsteuerung häufig vermieden werden.

Nach einer vorteilhaften Weiterbildung der Erfindung können mehrere laufzeitumgebungsspezifische Adapter jeweils einer Laufzeitumgebung zugeordnet sein. Die Adapter dienen dabei zur Adaption von Ausführungsmodulen an die zugeordnete Laufzeitumgebung. Weiterhin kann eine Umgebungsinformation über eine Laufzeitumgebung des technischen Systems erfasst werden, und abhängig von der erfassten Umgebungsinformation kann ein der Laufzeitumgebung des technischen Systems zugeordneter Adapter selektiert werden. Das selektierte Ausführungsmodul kann dann über den selektierten Adapter an die Laufzeitumgebung gekoppelt werden. Auf diese Weise können Ausführungsmodule und Steuermodelle weitgehend unabhängig von der jeweiligen Laufzeitumgebung erstellt und implementiert werden. Entsprechend können Adapter weitgehend unabhängig vom Typ des Steuermodells entwickelt und implementiert werden. Somit können Steuermodelle und Laufzeitumgebung gewissermaßen entkoppelt werden, wodurch ein Entwicklungs- und/oder Implementierungsprozess häufig erheblich vereinfacht wird.

Darüber hinaus kann der selektierte Adapter eine Fähigkeitsinformation über Fähigkeiten der Laufzeitumgebung des technischen Systems bereitstellen. Abhängig von der Fähigkeitsinformation kann eine Kompatibilität des Steuermodells mit der Laufzeitumgebung geprüft und abhängig davon das Steuermodell ausgeführt werden. Auf diese Weise kann eine automatische Implementierung des Steuermodells vereinfacht werden.

Ein Ausführungsbeispiel der Erfindung wird nachfolgend anhand der Zeichnung näher erläutert. Dabei zeigen jeweils in schematischer Darstellung
- Figur 1: einen erfindungsgemäßen Datencontainer mit einem kodierten Steuermodell,
- Figur 2: ein technisches System mit einer erfindungsgemäßen Steuervorrichtung,
- Figur 3: eine Veranschaulichung eines Ableitens von Steuerdaten aus Betriebsdaten mittels eines Steuermodells und
- Figur 4: eine Veranschaulichung eines Zusammenwirkens von Steuermodellen mit Laufzeitumgebungen.

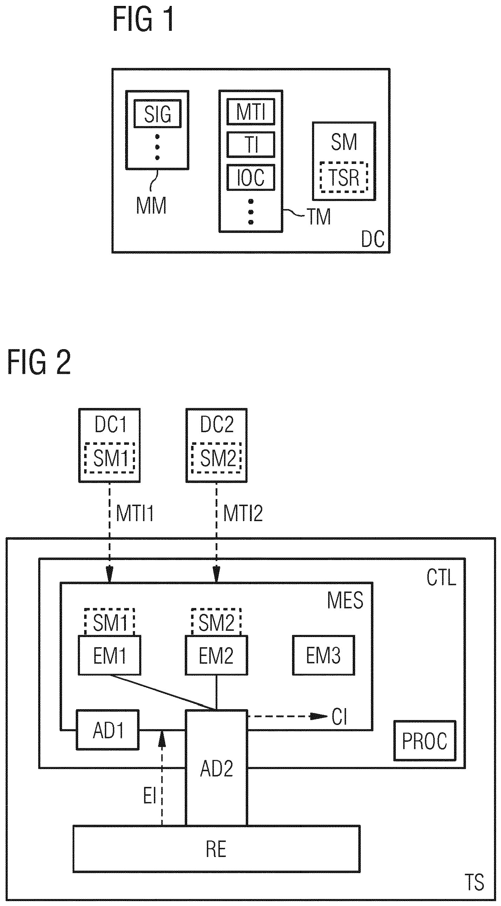

In Figur 1 ist ein erfindungsgemäßer Datencontainer DC mit einem kodierten, trainierten und/oder trainierbaren Steuermodell SM schematisch dargestellt. Das Steuermodell SM dient zum Simulieren einer physikalischen, regelungstechnischen und/oder stochastischen Dynamik oder eines anderen Wirkungszusammenhangs eines technischen Systems oder eines Teils davon. Das Steuermodell SM kann ein neuronales Netz, einen datengetriebenen Regressor, eine Support-Vector-Machine, einen Entscheidungsbaum und/oder ein anderes analytisches Modell oder eine Kombination davon umfassen. Das Steuermodell SM ist im Datencontainer DC modelltypübergreifend kodiert, z.B. im sog. PMML-Format (PMML: Predictive Model Markup Language) oder in einem proprietären Format.

Im vorliegenden Ausführungsbeispiel ist das Steuermodell SM zur Datensicherung bei Übertragung und Speicherung zusätzlich verschlüsselt. Darüber hinaus weist das Steuermodell SM eine Trainingsstruktur TSR auf. Die Trainingsstruktur TSR umfasst eine lernfähige Struktur, vorzugsweise in einem vortrainierten Trainingszustand. Bei einem neuronalen Netz kann die Trainingsstruktur TSR beispielsweise eine Vernetzungsstruktur von Neuronen sowie Gewichte von Verbindungen zwischen Neuronen umfassen. Bei datengetriebenen Regressoren kann die Trainingsstruktur TSR Koeffizienten des Regressormodells enthalten. Die Trainingsstruktur TSR kann sowohl ein durchgeführtes als auch ein zukünftiges Training des Steuermodells SM betreffen.

Der Datencontainer DC beinhaltet weiterhin technische Metadaten TM sowie Modellmetadaten MM.

Die technischen Metadaten TM umfassen im vorliegenden Ausführungsbeispiel eine Modelltypinformation MTI, eine Trainingsinformation TI sowie Input-Output-Kontrakt-Daten IOC. Darüber hinaus enthalten die technischen Metadaten TM Kontextinformation, wie z.B. eine Erstellungszeit des Steuermodells SM, Information über bestimmungsgemäße Zielsysteme und/oder Information über Anforderungen des Steuermodells SM an eine Laufzeitumgebung, z.B. hinsichtlich Echtzeitfähigkeiten, Parallelisierbarkeit, Rechenressourcen und/oder Kompatibilität mit unterschiedlichen Ausführungsmodellen.

Die Modelltypinformation MTI ist modelltypübergreifend kodiert und gibt einen Typ des Steuermodells SM an. Dabei kann z.B. angegeben werden, ob das Steuermodell SM auf einem neuronalen Netz, auf einem datengetriebenen Regressor, auf einer Support-Vector-Machine, auf einem Entscheidungsbaum und/oder auf einer Kombination davon basiert. Darüber hinaus können Eingangsgrößen und/oder Ausgangsgrößen des Steuermodells SM sowie andere spezifische Anforderungen, Fähigkeiten und/oder Eigenschaften des Steuermodells SM angegeben werden.

Die Trainingsinformation TI beschreibt einen erfolgten und/oder folgenden Trainingsprozess und/oder einen Trainingszustand des Steuermodells SM.

Die Input-Output-Kontrakt-Daten IOC spezifizieren einen sogenannten Input-Output-Kontrakt, der Nebenbedingungen an ein Verhalten des Steuermodells SM stellt. Durch die Input-Output-Kontrakt-Daten IOC können vorgegebene Nebenbedingungen, wie z.B. Wertebereiche, Werteveränderungen, eine Geschwindigkeit von Werteveränderungen und/oder Datentypen von Eingabedaten und/oder Ausgabedaten des Steuermodells SM vorzugsweise in einem modelltypübergreifenden Format angegeben werden. Die Input-Output-Kontrakt-Daten IOC können vorteilhafterweise in einem benutzerlesbaren Format angegeben werden, um so ein erwünschtes Verhalten des Steuermodells SM - dessen Trainingsstruktur TSR im Allgemeinen nicht benutzerlesbar ist -, auf überprüfbare Weise zu gewährleisten.

Die Modellmetadaten MM enthalten im vorliegenden Ausführungsbeispiel eine oder mehrere digitale Signaturen SIG, z.B. von Personen und/oder Stellen, die das Steuermodell SM erstellt, trainiert und/oder geändert haben.

Darüber hinaus können die Modellmetadaten MM eine Versionsinformation, eine Rechteinformation, eine Information über einen Ursprung und/oder über ein Zielsystem des Steuermodells SM umfassen. Weiterhin können in den Modellmetadaten MM Angaben über einen Gültigkeitszeitraum, über benötigte Datenverarbeitungsressourcen und/oder über zulässige oder mögliche Einsatzgebiete, z.B. zur Überwachung, zur Prognose und/oder zur Steuerung, enthalten sein.

Figur 2 zeigt ein technisches System TS mit einer erfindungsgemäßen Steuervorrichtung CTL für das technische System TS in schematischer Darstellung. Das technische System TS kann z.B. ein Kraftwerk, eine Produktionsanlage, eine Gasturbine etc. sein.

Das technische System TS verfügt über eine Laufzeitumgebung RE zur Datenverarbeitung und zur Steuerung des technischen Systems TS. Eine solche Laufzeitumgebung, hier RE, kann eine Kombination von Betriebssystem, Cloud/Cluster-Middleware und/oder Datenverarbeitungsumgebung umfassen. Beispiele hierfür sind ein Linux-Cluster mit Hadoop/HIVE-Framework, eine Cluster-Stream-Processing-Umgebung oder eine Multicore-Stream-Processing-Umgebung.

Die Steuervorrichtung CTL, z.B. ein Steuersystem einer Gasturbine, enthält einen oder mehrere Prozessoren PROC zum Ausführen aller Verfahrensschritte der Steuervorrichtung CTL sowie ein Modellausführungssystem MES. Letzteres ist im vorliegenden Ausführungsbeispiel in der Steuervorrichtung CTL implementiert, kann aber alternativ oder zusätzlich zumindest teilweise extern, z.B. in einer Cloud implementiert sein. Das Modellausführungssystem MES kann als Abstraktionsschicht zwischen Steuermodellen und der Laufzeitumgebung RE genutzt werden. Das Modellausführungssystem MES umfasst mehrere Ausführungsmodule EM1, EM2 und EM3 sowie mehrere Adapter AD1 und AD2.

Die Ausführungsmodule EM1, EM2 und EM3 dienen zum Ausführen, Installieren, Initialisieren und/oder Auswerten von trainierten und/oder trainierbaren Steuermodellen auf dem bzw. für das technische System. Die Ausführungsmodule EM1, EM2 und EM3 sind jeweils für einen Steuermodelltyp spezifisch. Derartige Ausführungsmodule werden häufig auch als Interpreter bezeichnet.

Die Adapter AD1 und AD2 dienen zur Adaption von Ausführungsmodulen, hier EM1, EM2 und EM3, an unterschiedliche Laufzeitumgebungen. Die Adapter AD1 und AD2 sind jeweils spezifisch für eine Laufzeitumgebung.

Zur Selektion eines laufzeitumgebungsspezifischen Adapters erfasst das Modellausführungssystem MES von der im technischen System TS vorhandenen Laufzeitumgebung RE eine Umgebungsinformation EI, die die Laufzeitumgebung RE beschreibt. Abhängig von der erfassten Umgebungsinformation EI selektiert das Modellausführungssystem MES einen der Adapter AD1, AD2, der für die durch die Umgebungsinformation EI beschriebene Laufzeitumgebung, hier RE, spezifisch und geeignet ist. Im vorliegenden Ausführungsbeispiel erweist sich der Adapter AD2 als für die vorliegende Laufzeitumgebung RE geeignet und wird infolgedessen selektiert und an die Laufzeitumgebung RE gekoppelt.

Der selektierte Adapter AD2 stellt daraufhin eine Fähigkeitsinformation CI über spezifische Fähigkeiten der Laufzeitumgebung RE bereit, anhand der eine Kompatibilität von Steuermodellen mit der Laufzeitumgebung RE durch das Modellausführungssystem MES geprüft werden kann.

Zum Steuern des technischen Systems TS empfängt das Modellausführungssystem MES verschiedene Datencontainer DC1 und DC2, die jeweils wie in Figur 1 beschrieben ausgestaltet sind. Die Datencontainer DC1 und DC2 enthalten jeweils ein spezifisches Steuermodell SM1 bzw. SM2. Vorzugsweise werden die Datencontainer DC1 und DC2 zum technischen System TS als spezifische Nachrichten übermittelt.

Die Steuermodelle SM1 und SM2 sind jeweils ausgestaltet wie im Zusammenhang mit Figur 1 beschrieben und dienen zum Simulieren verschiedener physikalischer, regelungstechnischer, stochastischer und/oder anderer Wirkungszusammenhänge des technischen Systems TS oder eines Teils davon. Vorzugsweise sind die Steuermodelle SM1 und SM2 jeweils spezifisch für bestimmte Teile des technischen Systems, bestimmte Regelungsaufgaben, bestimmte Steuerungsaufgaben und/oder bestimmte Simulationstypen. Die Steuermodelle SM1 und SM2 sind jeweils modelltypübergreifend kodiert.

Mit den Datencontainern DC1 und DC2 wird jeweils eine Modelltypinformation MTI1 beziehungsweise MTI2 für das Steuermodell SM1 beziehungsweise SM2 zum Modellausführungssystem MES übermittelt. MTI1 und MTI2 geben jeweils einen Modelltyp des Steuermodells SM1 beziehungsweise SM2 an und können jeweils wie im Zusammenhang mit Figur 1 beschrieben ausgestaltet sein.

Nach Empfang der Datencontainer DC1 und DC2 entpackt das Modellausführungssystem MES diese Datencontainer und prüft jeweils deren digitale Signaturen. Bei negativem Prüfungsergebnis wird eine weitere Verarbeitung des betreffenden Steuermodells SM1 bzw. SM2 unterdrückt. Darüber hinaus prüft das Modellausführungssystem MES für ein jeweiliges Steuermodell SM1 beziehungsweise SM2 anhand von deren technischen Metadaten und anhand der Fähigkeitsinformation CI, ob und inwieweit das jeweilige Steuermodell SM1 beziehungsweise SM2 mit der Laufzeitumgebung RE kompatibel ist. Abhängig davon erfolgt eine weitere Verarbeitung des jeweiligen Steuermodells SM1 beziehungsweise SM2.

Weiterhin entschlüsselt das Modellausführungssystem MES die verschlüsselten Steuermodelle SM1 und SM2. Dabei werden vorzugsweise nur ausführungsrelevante Teile des jeweiligen Steuermodells entschlüsselt, so dass das Steuermodell zwar ausführbar ist, aber eine Modellstruktur des Steuermodells nicht mit vertretbarem Aufwand ableitbar ist.

Weiterhin selektiert das Modellausführungssystem MES für jedes Steuermodell SM1 und SM2 ein für dieses jeweils spezifisches Ausführungsmodul anhand der Modelltypinformation MTI1 beziehungsweise MTI2 und gegebenenfalls anhand anderer technischer Metadaten. Im vorliegenden Ausführungsbeispiel wird für das Steuermodell SM1 das Ausführungsmodul EM1 und für das Steuermodell SM2 das Ausführungsmodul EM2 selektiert und zugeordnet. Das Modellausführungssystem MES koppelt daraufhin die selektierten Ausführungsmodule EM1 und EM2 über den selektierten Adapter AD2 an die Laufzeitumgebung RE.

Zur Verarbeitung von Betriebsdaten des technischen Systems TS führt das Modellausführungssystem MES die Steuermodelle SM1 und/oder SM2 auf der Laufzeitumgebung RE aus, wobei das Modellausführungssystem MES die Ausführung eines jeweiligen Steuermodells SM1 beziehungsweise SM2 zum jeweils zugeordneten Ausführungsmodul EM1 beziehungsweise EM2 delegiert. Während der Ausführung eines jeweiligen Steuermodells SM1 beziehungsweise SM2 wird anhand der Input-Output-Kontrakt-Daten des jeweiligen Steuermodells SM1 beziehungsweise SM2 eine Einhaltung des dadurch spezifizierten Input-Output-Kontrakts überwacht und sichergestellt.

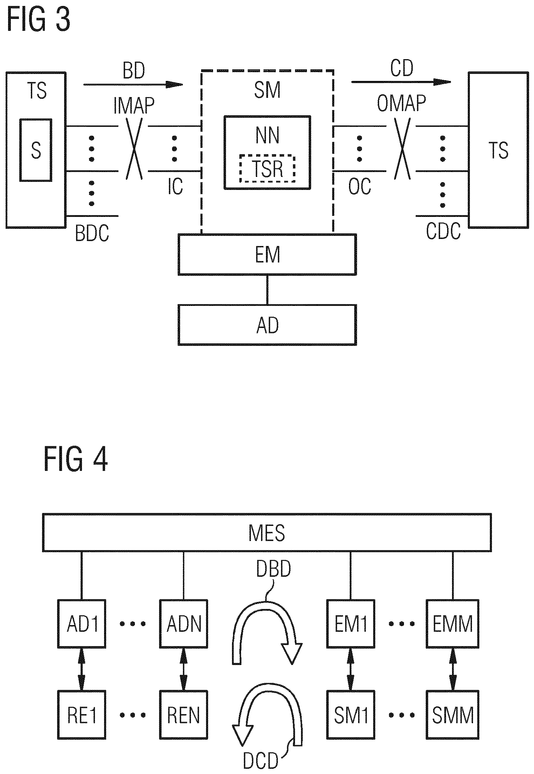

Figur 3 veranschaulicht ein Ableiten von Steuerdaten CD aus Betriebsdaten BD des technischen Systems TS mittels eines Steuermodells SM, das durch ein Ausführungsmodul EM mittels eines angekoppelten Adapters AD auf dem technischen System TS ausgeführt wird. Aus Übersichtlichkeitsgründen ist dasselbe technische System TS auf beiden Seiten der Figur 3 schematisch dargestellt. Das technische System TS, das Steuermodell SM, das Ausführungsmodul EM sowie der Adapter AD sind vorzugsweise so ausgestaltet wie in Zusammenhang mit den Figuren 1 und 2 beschrieben.

Das Steuermodell SM ist mittels eines neuronalen Netzes NN implementiert, das eine Trainingsstruktur TSR aufweist.

Das technische System TS verfügt über Sensoren S zum Erfassen der Betriebsdaten BD des technischen Systems TS. Die Betriebsdaten BD können zum Beispiel physikalische, regelungstechnische und/oder bauartbedingte Betriebsgrößen, Eigenschaften, Vorgabewerte, Zustandsdaten, Systemdaten, Steuerdaten, Sensordaten und/oder Messwerte des technischen System TS sein. Insbesondere können die Betriebsdaten BD auch nicht von den Sensoren S stammende Daten umfassen.

Die Betriebsdaten BD werden über spezifische Betriebsdatenkanäle BDC des technischen Systems TS erfasst. Die Betriebsdatenkanäle BDC können hierbei spezifisch für einen Datentyp, für eine physikalische Dimension, für eine Herkunft, für eine Funktion und/oder für andere Eigenschaften der Betriebsdaten BD sein.

Das Steuermodell SM weist verschiedene Eingabekanäle IC auf, die verschiedenen Eingangsparametern oder Eingabedaten des Steuermodells SM zugeordnet sind. Die Eingabekanäle IC können spezifisch für einen Parametertyp, für eine physikalische Dimension, für eine Herkunft, für eine Funktion und/oder für andere Eigenschaften der Eingangsparameter beziehungsweise Eingabedaten sein.

Zwischen den Eingabekanälen IC und den Betriebsdatenkanälen BDC findet eine Zuordnung IMAP statt, bei der einem jeweiligen Eingabekanal IC anhand der Modelltypinformation MTI und gegebenenfalls anhand der Input-Output-Kontrakt-Daten IOC jeweils einer der Betriebsdatenkanäle BDC zugeordnet wird. Die Zuordnung IMAP wird durch das Modellausführungssystem MES, vorzugsweise mittels des selektierten Ausführungsmoduls EM vorgenommen.

Anhand der den Betriebsdatenkanälen BDC und Eingabekanälen IC jeweils zugeordneten Datentypen, physikalischen Dimensionen, Wertebereichen und/oder Nebenbedingungen wird durch das Modellausführungssystem MES geprüft, ob die zugeordneten Datentypen, physikalischen Dimensionen, Wertebereiche beziehungsweise Nebenbedingungen der Eingabekanäle IC zu denjenigen der zugeordneten Betriebsdatenkanäle BDC kompatibel sind. Falls dies nicht der Fall ist, wird eine Ausführung des Steuermodells SM unterdrückt.

Die über die Betriebsdatenkanäle BDC erfassten Betriebsdaten BD werden dem Steuermodell SM über die zugeordneten Eingabekanäle IC als Eingabedaten zugeführt. Das Modellausführungssystem MES führt das Steuermodell SM mittels des selektierten Ausführungsmoduls EM aus, wobei aus den übermittelten Betriebsdaten BD gemäß der Trainingsstruktur TSR Steuerdaten CD abgeleitet werden. Die Steuerdaten CD werden als Ausgabedaten des Steuermodells SM ausgegeben. Die Steuerdaten CD dienen hierbei zum Steuern des technischen System TS und können insbesondere auch steuerungsrelevante Prognosedaten und Überwachungsdaten sein.

Die Steuerdaten CD werden über spezifische Ausgabekanäle OC des Steuermodells SM ausgegeben, die verschiedenen Ausgangsparametern des Steuermodells SM zugeordnet sind. Die Ausgabekanäle OC können jeweils spezifisch für einen Parametertyp, eine Verwendung, einen Zweck und/oder eine Steuerfunktion der darüber ausgegebenen Steuerdaten CD sein.

Das Modellausführungssystem MES führt, vorzugsweise mittels des selektierten Ausführungsmoduls EM, eine Zuordnung OMAP eines jeweiligen Ausgabekanals OC zu einem von mehreren Steuerkanälen CDC des technischen Systems aus. Die Zuordnung erfolgt dabei abhängig von der Modelltypinformation MTI und gegebenenfalls abhängig von den Input-Output-Kontrakt-Daten IOC. Bei der Zuordnung OMAP wird geprüft, ob die zugeordneten Datentypen, physikalischen Dimensionen, Wertebereiche etc. der Steuerkanäle CDC und der Ausgabekanäle OC zueinander kompatibel sind. Falls nicht, wird die Ausführung des Steuermodells SM unterdrückt.

Während der Ausführung des Steuermodells SM wird durch das Modellausführungssystems MES anhand der Input-Output-Kontrakt-Daten IOC die Einhaltung des betreffenden Input-Output-Kontrakts überwacht und sichergestellt.

Figur 4 veranschaulicht ein Zusammenwirken verschiedener Steuermodelle SM1, ..., SMM mit verschiedenen Laufzeitumgebungen RE1, ..., REN.

Die Laufzeitumgebungen RE1, ..., REN sind jeweils über einen von mehreren laufzeitumgebungsspezifischen Adaptern AD1, ... bzw. ADN an ein Modellausführungssystem MES wie oben beschrieben gekoppelt. Weiterhin sind die Steuermodelle SM1, ..., SMM jeweils über eines von mehreren modelltypspezifischen Ausführungsmodulen EM1, ... bzw. EMM wie oben beschrieben an das Modellausführungssystem MES gekoppelt.

Ein Eintreffen von Betriebsdaten bei einer der Laufzeitumgebungen RE1, ... bzw. REN oder ein Erfassen dieser Betriebsdaten durch eine dieser Laufzeitumgebungen veranlasst eine datengetriebene Verarbeitung der Betriebsdaten durch eine Delegation DBD der Verarbeitung von der erfassenden Laufzeitumgebung RE1, ... bzw. REN über einen laufzeitumgebungsspezifischen Adapter AD1, ... bzw. ADN und ein modelltypspezifisches Ausführungsmodul EM1, ... bzw. EMM zum spezifischen Steuermodell SM1, ... bzw. SMM. Die Delegation DBD wird hierbei durch das Modellausführungssystem MES vermittelt.

Eine Ausgabe der durch ein jeweiliges Steuermodell SM1, ... bzw. SMM abgeleiteten Steuerdaten veranlasst eine durch das Modellausführungssystem MES vermittelte Delegation DCD des Steuerprozesses des technischen Systems. Die Delegation DCD erfolgt von einem jeweiligen Steuermodell SM1, ... bzw. SMM über das jeweilige zugeordnete modelltypspezifische Ausführungsmodul EM1, ... bzw. EMM und den jeweiligen laufzeitumgebungsspezifischen Adapter AD1, ... bzw. ADN zur zugeordneten Laufzeitumgebung RE1, ... bzw. REN, die das technische System TS anhand der Steuerdaten CD steuert.

## Patentansprüche

1. Verfahren zum Steuern eines technischen Systems (TS) anhand eines trainierten und/oder trainierbaren Steuermodells (SM, SM1, SM2), wobei mittels eines Prozessors (PROC)
a) ein Datencontainer (DC, DC1, DC2) empfangen wird, in dem ein Steuermodell (SM, SM1, SM2) mit einer Trainingsstruktur (TSR) sowie eine Modelltypinformation (MTI, MTI1, MTI2) modelltypübergreifend kodiert sind,
b) abhängig von der Modelltypinformation (MTI, MTI1, MTI2) eines von mehreren modelltypspezifischen Ausführungsmodulen (EM1, EM2, EM3) für das technische System (TS) selektiert wird, wobei die Ausführungsmodule (EM1, EM2, EM3) zum Ausführen, Initialisieren und/oder Auswerten von trainierten und/oder trainierbaren Steuermodellen auf dem oder für das technische System (TS) dienen,
c) abhängig von der Modelltypinformation (MTI, MTI1, MTI2) Betriebsdatenkanäle (BDC) des technischen Systems (TS) Eingabekanälen (IC) des Steuermodells (SM, SM1, SM2) zugeordnet werden,
d) Betriebsdaten (BD) des technischen Systems (TS) über einen jeweiligen Betriebsdatenkanal (BDC) erfasst werden und über einen diesem Betriebsdatenkanal zugeordneten Eingabekanal (IC) dem Steuermodell (SM, SM1, SM2) übermittelt werden,
e) das Steuermodell (SM, SM1, SM2) mittels des selektierten Ausführungsmoduls (EM1, EM2) ausgeführt wird, wobei aus den übermittelten Betriebsdaten (BD) gemäß der Trainingsstruktur (TSR) Steuerdaten (CD) abgeleitet werden, und
f) die Steuerdaten (CD) zum Steuern des technischen Systems (TS) ausgegeben werden.

2. Verfahren nach Anspruch 1, **dadurch gekennzeichnet, dass** das Steuermodell (SM, SM1, SM2) ein neuronales Netz, einen datengetriebenen Regressor, eine Support-Vector-Machine und/oder einen Entscheidungsbaum umfasst.

3. Verfahren nach einem der vorhergehenden Ansprüche, **dadurch gekennzeichnet, dass**
das Steuermodell (SM, SM1, SM2) im Datencontainer (DC, DC1, DC2) in verschlüsselter Form vorliegt und durch das technische System (TS) zumindest teilweise entschlüsselt wird.

4. Verfahren nach einem der vorhergehenden Ansprüche, **dadurch gekennzeichnet, dass**
nur ausführungsrelevante Teile des Steuermodells (SM1, SM2, SM3) durch das technische System (TS) entschlüsselbar sind und eine spezifische Modellstruktur verborgen bleibt.

5. Verfahren nach einem der vorhergehenden Ansprüche, **dadurch gekennzeichnet, dass**
das Steuermodell (SM, SM1, SM2) im Datencontainer (DC, DC1, DC2) mit einer digitalen Signatur (SIG) versehen ist,
die digitale Signatur (SIG) geprüft wird, und
das Steuermodell abhängig vom Prüfungsergebnis ausgeführt wird.

6. Verfahren nach einem der vorhergehenden Ansprüche, **dadurch gekennzeichnet,**
**dass** der Datencontainer (DC, DC1, DC2) eine Trainingsinformation (TI) über ein Training des Steuermodells (SM, SM1, SM2) umfasst, und
**dass** die Ausführung des Steuermodells (SM, SM1, SM2) und/oder
die Selektion des Ausführungsmoduls (EM1, EM2) abhängig von der Trainingsinformation (TI) erfolgt.

7. Verfahren nach einem der vorhergehenden Ansprüche, **dadurch gekennzeichnet, dass**
den Betriebsdatenkanälen (BDC) und den Eingabekanälen (IC) jeweils ein Datentyp, eine physikalische Dimension, ein Wertebereich und/oder eine Nebenbedingung zugeordnet ist und beim Zuordnen eines jeweiligen Betriebsdatenkanals (BDC) zu einem jeweiligen Eingabekanal (IC) geprüft wird, ob die zugeordneten Datentypen, physikalischen Dimensionen, Wertebereiche und/oder Nebenbedingungen kompatibel sind.

8. Verfahren nach einem der vorhergehenden Ansprüche, **dadurch gekennzeichnet, dass**
die Steuerdaten (CD) hinsichtlich ihres Wertebereichs, einer Werteveränderung und/oder einer Nebenbedingung geprüft werden.

9. Verfahren nach einem der vorhergehenden Ansprüche, **dadurch gekennzeichnet,**
**dass** mehrere laufzeitumgebungsspezifische Adapter (AD, AD1, AD2) jeweils einer Laufzeitumgebung (RE) zugeordnet sind zur Adaption von Ausführungsmodulen (EM1, EM2, EM3) an die zugeordnete Laufzeitumgebung (RE), wobei jeder Adapter (AD1, AD2, AD3) eine Fähigkeitsinformation (CI) über spezifische Fähigkeiten der Laufzeitumgebung (RE) bereitstellt, anhand der eine Kompatibilität von Steuermodellen (SM, SM1, SM2) mit der Laufzeitumgebung (RE) geprüft werden kann,
**dass** eine Umgebungsinformation (EI), die die Laufzeitumgebung (RE) beschreibt, über eine Laufzeitumgebung (RE) des technischen Systems (TS) erfasst wird,
**dass** abhängig von der erfassten Umgebungsinformation (EI) ein der Laufzeitumgebung (RE) des technischen Systems (TS) zugeordneter Adapter (AD2) selektiert wird, und
**dass** das selektierte Ausführungsmodul (EM1, EM2) über den selektierten Adapter (AD2) an die Laufzeitumgebung (RE) gekoppelt wird.

10. Verfahren nach Anspruch 9, **dadurch gekennzeichnet,**
**dass** der selektierte Adapter (AD2) die Fähigkeitsinformation (CI) über Fähigkeiten der Laufzeitumgebung (RE) des technischen Systems (TS) bereitstellt, und
**dass** abhängig von der Fähigkeitsinformation (CI) eine Kompatibilität des Steuermodells (SM, SM1, SM2) mit der Laufzeitumgebung (RE) geprüft wird und abhängig davon das Steuermodell ausgeführt wird.

11. Verfahren nach einem der vorhergehenden Ansprüche,
**dadurch gekennzeichnet, dass**
das Steuermodell (SM, SM1, SM2) anhand der übermittelten Betriebsdaten (BD) regelmäßig nachtrainiert oder fortlaufend trainiert wird.

12. Vorrichtung zum Steuern eines technischen Systems (TS) anhand eines trainierten und/oder trainierbaren Steuermodells (SM, SM1, SM2), wobei die Vorrichtung einen oder mehrere Prozessoren (PROC) umfasst und die Vorrichtung zum Ausführen eines Verfahrens nach einem der vorhergehenden Ansprüche eingerichtet ist.

13. Computerprogrammprodukt umfassend Befehle, die bei der Ausführung des Programms durch einen Computer diesen veranlassen, das Verfahren Verfahrens nach einem der Ansprüche 1 bis 11 auszuführen.

14. Computerlesbares Speichermedium mit einem Computerprogrammprodukt nach Anspruch 13.

## Claims

1. Method for controlling a technical system (TS) by means of a trained and/or trainable control model (SM, SM1, SM2), wherein, by way of a processor (PROC),
a) a data container (DC, DC1, DC2) is received in which a control model (SM, SM1, SM2) having a training structure (TSR) and model type information (MTI, MTI1, MTI2) are encoded for all model types,
b) one of a plurality of model type-specific execution modules (EM1, EM2, EM3) is selected for the technical system (TS) depending on the model type information (MTI, MTI1, MTI2), wherein the execution modules (EM1, EM2, EM3) serve to execute, initialize and/or evaluate trained and/or trainable control models on the or for the technical system (TS),
c) operating data channels (BDC) of the technical system (TS) are assigned to input channels (IC) of the control model (SM, SM1, SM2) depending on the model type information (MTI, MTI1, MTI2),
d) operating data (BD) of the technical system (TS) are acquired via a respective operating data channel (BDC) and are transmitted to the control model (SM, SM1, SM2) via an input channel (IC) assigned to this operating data channel,
e) the control model (SM, SM1, SM2) is executed by way of the selected execution module (EM1, EM2), wherein control data (CD) are derived from the transmitted operating data (BD) according to the training structure (TSR), and
f) the control data (CD) are output in order to control the technical system (TS).

2. Method according to Claim 1, **characterized in that**
the control model (SM, SM1, SM2) comprises a neural network, a data-driven regressor, a support vector machine and/or a decision tree.

3. Method according to either of the preceding claims, **characterized in that**
the control model (SM, SM1, SM2) is present in the data container (DC, DC1, DC2) in encrypted form and is at least partly decrypted by the technical system (TS).

4. Method according to one of the preceding claims, **characterized in that**
only execution-relevant parts of the control model (SM1, SM2, SM3) are able to be decrypted by the technical system (TS), and a specific model structure remains concealed.

5. Method according to one of the preceding claims, **characterized in that**
the control model (SM, SM1, SM2) in the data container (DC, DC1, DC2) is provided with a digital signature (SIG),
the digital signature (SIG) is checked, and
the control model is executed depending on the result of the check.

6. Method according to one of the preceding claims, **characterized**
**in that** the data container (DC, DC1, DC2) comprises training information (TI) regarding training of the control model (SM, SM1, SM2), and
**in that** the execution of the control model (SM, SM1, SM2) and/or the selection of the execution module (EM1, EM2) takes place depending on the training information (TI).

7. Method according to one of the preceding claims, **characterized in that**
the operating data channels (BDC) and the input channels (IC) are each assigned a data type, a physical dimension, a range of values and/or an additional condition, and, in the assignment of a respective operating data channel (BDC) to a respective input channel (IC), it is checked whether the assigned data types, physical dimensions, ranges of values and/or additional conditions are compatible.

8. Method according to one of the preceding claims, **characterized in that**
the control data (CD) are checked with regard to their range of values, a change in value and/or an additional condition.

9. Method according to one of the preceding claims, **characterized**
**in that** a plurality of runtime environment-specific adapters (AD, AD1, AD2) are each assigned to a runtime environment (RE) in order to adapt execution modules (EM1, EM2, EM3) to the assigned runtime environment (RE), wherein each adapter (AD1, AD2, AD3) provides capability information (CI) regarding specific capabilities of the runtime environment (RE), by means of which compatibility of control models (SM, SM1, SM2) with the runtime environment (RE) is able to be checked,
**in that** environment information (EI) regarding a runtime environment (RE) of the technical system (TS) and describing the runtime environment (RE) is acquired,
**in that**, depending on the acquired environment information (EI), an adapter (AD2) assigned to the runtime environment (RE) of the technical system (TS) is selected, and
**in that** the selected execution module (EM1, EM2) is coupled to the runtime environment (RE) via the selected adapter (AD2).

10. Method according to Claim 9, **characterized**
**in that** the selected adapter (AD2) provides the capability information (CI) regarding capabilities of the runtime environment (RE) of the technical system (TS), and
**in that**, depending on the capability information (CI), compatibility of the control model (SM, SM1, SM2) with the runtime environment (RE) is checked and the control model is executed depending thereon.

11. Method according to one of the preceding claims, **characterized in that**
the control model (SM, SM1, SM2) is regularly retrained or continuously trained by means of the transmitted operating data (BD).

12. Device for controlling a technical system (TS) by means of a trained and/or trainable control model (SM, SM1, SM2), wherein the device comprises one or more processors (PROC) and the device is configured to execute a method according to one of the preceding claims.

13. Computer program product comprising instructions that, when the program is executed by a computer, prompt said computer to execute the method according to one of Claims 1 to 11.

14. Computer-readable storage medium having a computer program product according to Claim 13.

## Revendications

1. Procédé destiné à la commande d'un système technique (TS) à l'aide d'un modèle de commande ayant appris et/ou apte à apprendre (SM, SM1, SM2), dans lequel au moyen d'un processeur (PROC)
a) un conteneur de données (DC, DC1, DC2) est reçu, dans lequel un modèle de commande (SM, SM1, SM2) avec une structure d'apprentissage (TSR) ainsi qu'une information sur le type de modèle (MTI, MTI1, MTI2) sont codés de manière à appartenir à différents types de modèle,
b) en fonction de l'information sur le type de modèle (MTI, MTI1, MTI2) un parmi plusieurs modules d'exécution spécifiques au type de modèle (EM1, EM2, EM3) pour le système technique (TS) est sélectionné, dans lequel les modules d'exécution (EM1, EM2, EM3) servent à l'exécution, l'initialisation et/ou l'évaluation de modèles de commande ayant appris et/ou aptes à apprendre sur le ou pour le système technique (TS),
c) en fonction de l'information sur le type de modèle (MTI, MTI1, MTI2) des canaux de données opérationnelles (BDC) du système technique (TS) sont associés à des canaux d'entrée (IC) du modèle de commande (SM, SM1, SM2),
d) des données opérationnelles (BD) du système technique (TS) sont acquises par le biais d'un canal de données opérationnelles (BDC) respectif et sont transmises par le biais d'un canal d'entrée (IC) associé à ce canal de données opérationnelles au modèle de commande (SM, SM1, SM2),
e) le modèle de commande (SM, SM1, SM2) est exécuté au moyen du module d'exécution (EM1, EM2) sélectionné, dans lequel des données de commande (CD) sont déduites à partir des données opérationnelles (CD) transmises conformément à la structure d'apprentissage (TSR), et
f) les données de commande (CD) destinées à la commande du système technique (TS) sont émises.

2. Procédé selon la revendication 1, **caractérisé en ce que** le modèle de commande (SM, SM1, SM2) comprend un réseau neuronal, un prédicteur de réponse variable commandé par des données, une machine à vecteurs de support et/ou un arbre de décision.

3. Procédé selon l'une quelconque des revendications précédentes, **caractérisé en ce que** le modèle de commande (SM, SM1, SM2) est présent dans le conteneur de données (DC, DC1, DC2) sous forme cryptée et est décrypté au moins partiellement par le biais du système technique (TS).

4. Procédé selon l'une quelconque des revendications précédentes, **caractérisé en ce que** uniquement des parties du modèle de commande (SM1, SM2, SM3) relatives à l'exécution sont aptes à être décryptées par le biais du système technique (TS) et une structure de modèle spécifique reste masquée.

5. Procédé selon l'une quelconque des revendications précédentes, **caractérisé en ce que** le modèle de commande (SM, SM1, SM2) est doté d'une signature numérique (SIG) dans le conteneur de données (DC, DC1, DC2), la signature numérique (SIG) est vérifiée et le modèle de commande est exécuté en fonction du résultat de la vérification.

6. Procédé selon l'une quelconque des revendications précédentes, **caractérisé en ce que** le conteneur de données (DC, DC1, DC2) comprend une information d'apprentissage (TI) relative à un apprentissage du modèle de commande (SM, SM1, SM2), et
**en ce que** l'exécution du modèle de commande (SM, SM1, SM2) et/ou la sélection du module d'exécution (EM1, EM2) s'effectuent en fonction de l'information d'apprentissage (TI) .

7. Procédé selon l'une quelconque des revendications précédentes, **caractérisé en ce que** respectivement un type de données, une dimension physique, une plage de valeurs et/ou une contrainte sont associés aux canaux de données opérationnelles (BDC) et aux canaux d'entrée (IC) et lors de l'association d'un canal de données opérationnelles (BDC) respectif à un canal d'entrée (IC) respectif il est vérifié si les types de données, les dimensions physiques, les plages de valeurs et/ou les contraintes associés sont compatibles.

8. Procédé selon l'une quelconque des revendications précédentes, **caractérisé en ce que** les données de commande (CD) sont vérifiées en ce qui concerne leur plage de valeurs, une modification de valeur et/ou une contrainte.

9. Procédé selon l'une quelconque des revendications précédentes, **caractérisé en ce que**
plusieurs adaptateurs spécifiques à l'environnement de temps de marche (AD, AD1, AD2) sont respectivement associés à un environnement de temps de marche (RE) pour l'adaptation de modules d'exécution (EM1, EM2, EM3) à l'environnement de temps de marche (RE) associé, dans lequel une information sur la capacité (CI) relative à des capacités respectives de l'environnement de temps de marche (RE) est mise à la disposition de chaque adaptateur (AD1, AD2, AD3), à l'aide de laquelle une compatibilité de modèles de commande (SM, SM1, SM2) avec l'environnement de temps de marche (RE) peut être vérifiée,
**en ce qu'**une information sur l'environnement (EI) qui décrit l'environnement de temps de marche (RE) est acquise par le biais d'un environnement de temps de marche (RE) du système technique (TS),
**en ce qu'**en fonction de l'information sur l'environnement (EI) acquise un adaptateur (AD2) associé à l'environnement de temps de marche (RE) du système technique (TS) est sélectionné, et
**en ce que** le module d'exécution (EM1, EM2) sélectionné est couplé par le biais de l'adaptateur (A2) sélectionné à l'environnement de temps de marche (RE).

10. Procédé selon la revendication 9, **caractérisé en ce que** l'adaptateur (AD2) sélectionné met l'information sur la capacité (CI) relative à des capacités à disposition de l'environnement de temps de marche (RE) du système technique (TS) et **en ce qu'**en fonction de l'information sur la capacité (CI) une compatibilité du modèle de commande (SM, SM1, SM2) avec l'environnement de temps de marche (RE) est vérifiée et en fonction de celle-ci le modèle de commande est exécuté.

11. Procédé selon l'une quelconque des revendications précédentes, **caractérisé en ce que** le modèle de commande (SM, SM1, SM2) est soumis à un nouvel apprentissage régulièrement ou apprend de manière continue à l'aide des données opérationnelles (BD) transmises.

12. Dispositif destiné à la commande d'un système technique (TS) à l'aide d'un modèle de commande ayant appris et/ou apte à apprendre (SM, SM1, SM2), dans lequel le dispositif comprend un ou plusieurs processeurs (PROC) et le dispositif est conçu pour l'exécution d'un procédé selon l'une quelconque des revendications précédentes.

13. Produit de programme informatique comprenant des instructions qui, lors de l'exécution du programme par le biais d'un ordinateur, amènent celui-ci à exécuter le procédé selon l'une quelconque des revendications 1 à 11.

14. Support de données lisible par ordinateur avec un code de programme informatique selon la revendication 13.
